# FASCICULE DE BREVET EUROPEEN

(11) **EP 0 987 568 B1**
(45) Date de publication et mention de la délivrance du brevet: **19.12.2007**
(21) Numéro de dépôt: 99402284.6
(22) Date de dépôt: 17.09.1999
(51) Int. Cl.: G02B 6/02, G02B 6/036

(54) **Fibre optique monomode à dispersion décalée optimisée pour les hauts débits**
Optimierte dispersionsverschobene monomodige optische Faser für hohe Datenraten
High rate optimised monomode dispersion-shifted optical fiber

(30) Priorité: 17.09.1998 FR 9811644
(43) Date de publication de la demande: 22.03.2000
(73) Titulaire: Draka Comteq B.V., 1083 HJ Amsterdam (NL)
(72) Inventeur: Nouchi, Pascale, 78600 Maisons-Laffitte (FR); Rousseau, Jean-Claude, 78400 Chatou (FR); de Montmorillon, Louis-Anne, 75017 Paris (FR)
(74) Mandataire: Blokland, Arie

(56) Documents cités:
- EP-A- 0 724 171
- EP-A- 0 859 247
- WO-A-97/33188
- US-A- 5 483 612
- MASAO KATO, KENJI KURUKAWA, YOSHIAKI MIYAJIMA: "A new design for dispersion-shifted fiber with an effective core area larger than 100 um2 and good bending characteristics" OFC'98 TECHNICAL DIGEST, vol. 1, 22 - 27 février 1998, pages 301-302, XP002104987
- NOUCHI P ET AL: "New dispersion shifted fiber with effective area larger than 90 mu m/sup 2/" PROCEEDINGS OF THE EUROPEAN CONFERENCE ON OPTICAL COMMUNICATION, vol. 1, 15 - 19 septembre 1996, pages 49-52, XP002092143
- NOUCHI P: "Maximum effective area for non-zero dispersion-shifted fiber" OFC '98. OPTICAL FIBER COMMUNICATION CONFERENCE AND EXHIBIT TECHNICAL DIGEST. CONFERENCE EDITION, SAN JOSE, CA, FEBR. 22 - 27, 1998, page 303/304 304 XP002105703 OPTICAL SOCIETY OF AMERICA ISBN: 0-7803-4415-4

## Description

La présente invention a pour objet une fibre optique monomode à dispersion décalée, adaptée à être utilisée dans des systèmes de transmission en multiplexage de longueur d'onde à haut débit.

Les fibres monomodes à dispersion décalée doivent présenter des caractéristiques qui correspondent aux exigences des câbliers et des systémiers : d'une part une bonne "câblabilité", autrement dit, la mise en câble de la fibre doit entraîner une très faible atténuation supplémentaire, d'autre part, une surface effective importante pour éviter les effets non linéaires, et une valeur appropriée de la longueur d'onde λ₀ de dispersion nulle.

L'utilisation de ces fibres pour des systèmes de transmission à multiplexage de longueurs d'onde, à impulsions RZ, NRZ ou du type solitons, implique encore d'autres contraintes, d'autant plus qu'augmentent le nombre de canaux émis, le débit par canal, et les puissances après amplificateur et que diminue l'espacement entre canaux. Il est préférable de disposer d'une fibre présentant une dispersion chromatique non nulle aux longueurs d'onde de transmission pour éviter les phénomènes non linéaires, et notamment le mélange à quatre ondes (Four Wave Mixing ou FWM) en présence de plusieurs canaux. On utilise donc des fibres appelées NZ-DSF (acronyme de l'anglais "non zero DSF") présentant une longueur d'onde λ₀ de dispersion chromatique nulle en dehors de la plage des canaux du multiplex pour éviter les problèmes apportés par le mélange à quatre ondes.

En outre, l'utilisation de ces fibres pour des systèmes en multiplexage de longueurs d'onde conduit à rechercher une pente de dispersion chromatique faible, de manière à conserver des caractéristiques de propagation similaires pour les différents canaux.

De nombreux profils d'indice ont été proposés pour ces fibres optiques monomodes à dispersion décalée. Le profil d'indice est généralement qualifié en fonction de l'allure de la courbe représentative de l'indice en fonction du rayon de la fibre. On représente de façon classique sur les abscisses la distance r au centre de la fibre, et sur les ordonnées l'indice, défini par sa différence par rapport à l'indice de la gaine de la fibre, en valeur relative (Δn) ou en pour cent (Δn% = 100.Δn/n).

On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle.

L'article intitulé "Transmission charactéristics of a coaxial optical fiber line", Journal of Lightwave Technology, vol. 11 n°11, novembre 1993, décrit un profil de consigne du type à "creux central".

L'un des profils de fibre proposés dans cet article présente une longueur d'onde d'annulation de la dispersion chromatique voisine de 1450 nm avec une surface effective supérieure à 60 µm². Ces deux caractéristiques permettent de satisfaire les exigences en termes d'effets non linéaires et de mélange à quatre ondes. Toutefois, une fibre présentant un tel profil n'est pas utilisable dans les systèmes de télécommunications à haut débit car elle présente des pertes par courbure très élevées, bien supérieures en pratique à ce qu'exigent toutes les spécifications.

On connaît par ailleurs le document EP-0 724 171, qui propose plusieurs profils de fibres optiques monomodes à dispersion décalée utilisables dans les systèmes de télécommunications à haut débit. Ces fibres permettent de transmettre plusieurs canaux au voisinage de 1550 nm tout en évitant les effets non linéaires grâce à une surface effective supérieure à 60 µm².

Cependant, ces fibres présentent, compte tenu de leur longueur d'onde d'annulation de la dipsersion chromatique située vers 1530 ou 1560 nm, une dispersion chromatique très faible aux longueurs d'onde de transmission de la fenêtre située autour de 1550 nm. De ce fait, le phénomène de mélange à quatre ondes n'est pas évité dans ces fibres.

L'article "Design and fabrication of locally dispersion-flattened large effective area fibers", Y Liu et al., Proceedings of the European Conference on Optical Communication (EOC'98), 20-24 septembre 1998 Madrid (ES) ; pages 37 et 38 (XP-2106023) decrit une fibre optique monomode a dispersion décaleé presentant une surface effective de l'ordre de 70 µm².

Enfin, l'article "Maximum effective area for non-zero dispersion-shifted fiber" (OFC'98 - 22 au 27 février 1998 - pp 303-304) décrit une fibre optique monomode à dispersion décalée présentant une surface effective supérieure à 60 µm², de faibles pertes et une longueur d'onde d'annulation de la dispersion chromatique voisine de 1490 nm. Ici encore, la dispersion chromatique est trop faible aux longueurs d'onde de transmission pour permettre d'éviter le mélange à quatre ondes.

Le but de la présente invention est donc de mettre au point une fibre optique à dispersion décalée optimisée pour les hauts débits, c'est-à-dire présentant une forte surface effective, de faibles pertes et une longueur d'onde d'annulation de la dispersion chromatique distincte de 1550 nm, permettant d'éviter le phénomène de mélange à quatre ondes.

La présente invention propose à cet effet une fibre optique monomode à dispersion décalée selon la revendication 1.

La fibre selon l'invention est une fibre monomode à dispersion décalée ayant de faibles pertes par courbure et une forte surface effective, ainsi qu'une dispersion chromatique pour les longueurs d'onde situées dans la fenêtre de transmission autour de 1550 nm à la fois suffisamment faible pour ne pas entraîner de pertes d'informations lors de la transmission, et suffisamment forte pour éviter le phénomène de mélange à quatre ondes sur toute la fenêtre de transmission. En outre, la pente de la dispersion chromatique de la fibre selon l'invention est faible.

Avantageusement, la fibre est monomode en fibre.

Pour les systèmes à haut débit, il est aussi utile que la fibre assure une propagation monomode des canaux du multiplex. ITU-T G 650 donne une définition de la longueur d'onde de coupure en câble. La longueur d'onde de coupure théorique de la fibre est généralement supérieure de plusieurs centaines de nanomètres à la longueur d'onde de coupure en câble. Il apparaît en fait que la propagation dans une fibre optique peut être monomode, même si la longueur d'onde de coupure théorique est supérieure à la longueur d'onde des signaux utilisés : de fait, au-delà d'une distance de quelques mètres ou dizaines de mètres, qui est faible devant les distances de propagation dans les systèmes de transmission à fibre optique, les modes secondaires disparaissent du fait d'un affaiblissement trop important. La propagation dans le système de transmission est alors monomode.

Dans un mode de réalisation préféré de l'invention, la longueur d'onde λ₀ pour laquelle la dispersion chromatique est nulle est comprise entre 1450 et 1480 nm, et de préférence voisine de 1475 nm.

Avantageusement, la fibre présente une dispersion chromatique comprise en valeur absolue entre 1 et 6 ps/nm.km pour une longueur d'onde de 1550 nm.

La fibre présente une pente de dispersion comprise en valeur absolue entre 0,045 et 0,09 ps/nm².km, et de préférence entre 0,045 et 0,075 ps/nm².km pour des longueurs d'onde de 1550 nm. Ces valeurs de la pente de dispersion chromatique assurent, dans la plage d'utilisation de la fibre, que la dispersion chromatique reste sensiblement constante. La fibre est ainsi appropriée à une utilisation en multiplexage de longueur d'onde, et présente des valeurs de dispersion chromatique sensiblement égales sur la bande du multiplex.

De préférence, l'atténuation de la fibre est inférieure ou égale à 0,23 dB/km à 1550 nm. Une telle valeur de l'atténuation assure que les pertes de transmission sont limitées.

La fibre présente un profil d'indice comprenant une partie centrale d'indice maximal n₁ supérieur à celui nₛ de la gaine optique, un anneau d'indice maximal n₄ supérieur à celui de la gaine optique entourant ladite partie centrale, et une zone intermédiaire d'indice n₂ inférieur à n₁ et à n₄ entre ladite partie centrale et ledit anneau.

La différence Δn₁ entre n₁ et nₛ est comprise entre 6.10⁻³ et 15.10⁻³.

La différence Δn₄ entre n₄ et nₛ est inférieure à 10.10⁻³.

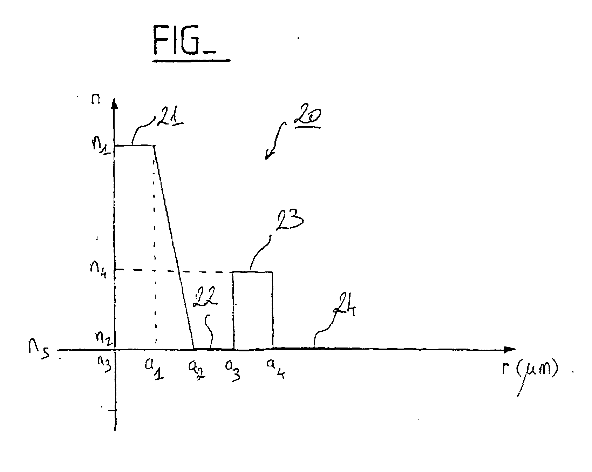

D'autres caractéristiques et avantages de l'invention apparaîtront à la lecture de la description qui suit de modes de réalisation de l'invention, donnée à titre d'exemple et en référence à la Figure, qui montre une représentation schématique du profil d'indice d'une fibre selon un deuxième mode de réalisation de l'invention.

L'invention propose une fibre optique monomode à dispersion décalée présentant une surface effective importante, typiquement supérieure à 60 µm², voire même supérieure à 70 µm², de faibles pertes par courbure et une longueur d'onde λ₀ pour laquelle la dispersion est nulle comprise entre 1400 et 1480 nm. Une valeur de λ₀ comprise entre 1450 et 1480 nm, par exemple autour de 1475 nm, s'avère appropriée pour des transmissions en multiplexage de longueurs d'ondes.

Avantageusement, la valeur de la longueur d'onde de coupure λ_{c} est choisie de sorte que la fibre de l'invention est monomode en théorie, ou à tout le moins monomode en fibre, i.e. suivant la définition donnée dans UIT-T G 650 du λ_{c} fibre.

Si l'on prévoit en outre que la sensibilité aux microcourbures est inférieure ou comparable à celle de la fibre commercialisée sous la référence G652 par la demanderesse, on assure une bonne cablabilité de la fibre. Ceci est d'autant plus le cas si l'atténuation provoquée par les courbures mesurées classiquement sur 100 tours d'une fibre enroulée sur une bobine de rayon 30 mm, est inférieure à 0,5 dB, comme proposé dans la recommandation UIT-T G.650, voire mieux encore de 0,05 dB.

On a porté dans le tableau 2 la longueur d'onde de coupure théorique λc en nm, la longueur d'onde λ₀ d'annulation de la dispersion chromatique en nm, la pente de dispersion à 1550 nm dC/dλ en ps/nm².km, la dispersion chromatique à 1550 nm DC en ps/nm.km, le diamètre de mode W₀₂ à 1550 nm en µm, la surface effective A_{eff} à 1550 nm en µm², la sensibilité aux courbure S_{c} (c'est-à-dire les pertes par courbure) pour 100 tours sur un rayon de 30 mm en dB, et la sensibilité aux microcourbures à 1550 nm Sµ_{c}. Cette sensibilité aux microcourbures est donnée en proportion par rapport à celle de la fibre G 652 mentionnée plus haut.

Comme dans l'exemple de la figure des variations autour des valeurs de consigne proposées dans le tableau 1 restent possibles; des variations des indices Δn de ±10%, du rayon a₁ de ±10%, du rapport a₂/a₁ de ±10%, de l'épaisseur a₃ - a₂ de ±10%, et de l'épaisseur a₄ - a₃ de ±10% fournissent des résultats convenables.

La figure montre une représentation schématique d'un profil d'indice 20, qui peut être utilisé pour obtenir les caractéristiques de l'invention, dans un mode de réalisation. Le profil d'indice de la figure est un profil d'indice de type "trapèze et anneau". Ce profil présente, en partant du centre de la fibre vers la gaine, une partie centrale 21 en forme de trapèze de petit rayon a₁ et de grand rayon a₂. L'indice maximal n₁ de cette partie centrale 21 est supérieur ou égal à l'indice nₛ de la silice de la gaine représentée par la partie 24 du profil 20.

Autour de cette partie centrale 21 d'indice n₂ supérieur à celui de la gaine 24, la fibre de l'invention présente un anneau 23 d'indice n₃ supérieur à celui de la gaine et inférieur à n₁, entre les rayons a₃ et a₄.

La fibre présente entre la partie centrale 21 et l'anneau 23 une partie annulaire 22 d'indice n₂ inférieur à n₁ et à n₃.

La fibre de la figure peut être fabriquée par l'homme du métier à l'aide de techniques connues, comme le MCVD ou les autres techniques couramment utilisées pour la fabrication des fibres optiques.

On donne maintenant à titre d'exemples des paramètres possibles pour le profil de la figure afin d'obtenir une fibre selon l'invention, et les valeurs des caractéristiques obtenues.

Le tableau 1 donne des valeurs possibles des rayons et des indices pour ces profils. Les rayons sont en micromètres, et les indices en Δn. Chaque ligne du tableau correspond à un profil possible

**Tableau 1**

| a₁ (µm) | a₂ (µm) | a₃ (µm) | a₄ (µm) | 10³. Δn₁ | 10³.Δn₃ | 10³.Δn₄ |
|---|---|---|---|---|---|---|
| 1,13 | 3,76 | 5,46 | 6,83 | 9,3 | 0 | 6,14 |
| 1,05 | 3,49 | 4,53 | 6,97 | 9,44 | 0 | 3,97 |

Ces différents profils permettent d'obtenir les caractéristiques indiquées dans le tableau 2 sur les lignes correspondantes

**Tableau 2**

| λ_{c} (nm) | λ₀ (nm) | dC/dλ | DC | Wₒ₂ | A_{eff} | S_{c} | Sµ_{c} |
|---|---|---|---|---|---|---|---|
| 1707 | 1478 | 0,085 | 6,1 | 9,74 | 73 | <10⁻⁵ | 0,64 |
| 1706 | 1457 | 0,088 | 8,2 | 10,27 | 81,6 | <10⁻⁵ | 0,79 |

Les valeurs de ce dernier tableau montrent que les profils définis dans le tableau permettent d'obtenir les caractéristiques de l'invention.

Bien entendu, la présente invention n'est pas limitée aux exemples et modes de réalisation décrits et représentés, mais elle est susceptible de nombreuses variantes accessibles à l'homme de l'art dans le cadre de l'invention revendiquée.

## Revendications

1. Fibre optique monomode à dispersion décalée, présentant
- un profil d'indice comprenant une partie centrale (21) d'indice maximal n₁ supérieur à celui nₛ de la gaine optique (24), un anneau (23) d'indice maximal n₄ supérieur à celui de la gaine optique (24), entourant ladite partie centrale (21), et une zone intermédiaire (22) d'indice n₂ inférieur à n₁ et à n₄ entre ladite partie centrale (21) et ledit anneau (23) ;
- une surface effective supérieure ou égale à 70 µm²;
**caractérisée en ce qu'**elle présente aussi :
- une longueur d'onde λ₀ d'annulation de la dispersion chromatique comprise entre 1400 et 1480 nm ;
- une différence entre l'indice de la partie centrale (21) et celui de la gaine (24) comprise entre 6.10⁻³ et 15.10⁻³ ;
- une différence entre l'indice de l'anneau (23) et celui de la gaine (24) inférieure à 10.10⁻³ ;
- une pente de dispersion comprise en valeur absolue entre 0,045 et 0,09 ps/nm².km pour des longueurs d'onde de 1550 nm; et
- des pertes par courbure inférieures à 0,05 dB à 1550 nm pour un enroulement de 100 tours de la fibre autour d'un rayon de 30 mm.

2. Fibre selon la revendication 1, **caractérisée en ce qu'**elle est monomode en fibre.

3. Fibre selon l'une des revendications 1 ou 2, **caractérisée en ce que** la longueur d'onde λ₀ pour laquelle la dispersion chromatique est nulle est comprise entre 1450 et 1480 nm, et de préférence voisine de 1475 nm.

4. Fibre selon l'une des revendications 1 à 3, **caractérisée en ce qu'**elle présente une pente de dispersion comprise en valeur absolue entre 0,045 et 0,075 ps/nm².km pour des longueurs d'onde de 1550 nm.

5. Fibre selon l'une des revendications 1 à 4, **caractérisée en ce qu'**elle présente une atténuation inférieure ou égale à 0,23 dB/ km à 1550 nm.

## Claims

1. Dispersion-shifted, single-mode optical fibre having:
- an index profile comprising a central portion (21) having a maximum index n₁ greater than that nₛ of the optical cladding (24), a ring (23) - surrounding said central portion (21) - having a maximum index n₄ greater than that of the optical cladding (24), and an intermediate zone (22) having an index n₂ less than n₁ and less than n₄ between said central portion (21) and said ring (23);
- an effective area greater than or equal to 70 µm²;
**characterised in that** it also has:
- a zero-chromatic-dispersion wavelength λ₀ of between 1400 and 1480 nm inclusive;
- a difference between the index of the central portion (21) and that of the cladding (24) of between 6 x 10⁻³ and 15 x 10⁻³ inclusive;
- a difference between the index of the ring (23) and that of the cladding (24) of less than 10 x 10⁻³;
- a dispersion slope of between 0.045 and 0.09 ps/nm².km inclusive in terms of absolute value for wavelengths of 1550 nm; and
- bending losses of less than 0.05 dB at 1550 nm for a winding of 100 turns of the fibre around a radius of 30 mm.

2. Fibre according to claim 1, **characterised in that** it is single-mode in fibre.

3. Fibre according to one of claims 1 or 2, **characterised in that** the wavelength λ₀ for which the chromatic dispersion is zero is between 1450 and 1480 nm inclusive, preferably around 1475 nm.

4. Fibre according to one of claims 1 to 3, **characterised in that** it has a dispersion slope of between 0.045 and 0.075 ps/nm².km inclusive in terms of absolute value for wavelengths of 1550 nm.

5. Fibre according to one of claims 1 to 4, **characterised in that** it has an attenuation less than or equal to 0.23 dB/km at 1550 nm.

## Patentansprüche

1. Optische Monomode-Faser mit verschobenem Dispersions-Nulldurchgang, die folgendes aufweist:
ein Indexprofil mit einem Mittelteil (21) mit maximalem Index n₁, der größer ist als nₛ der Umhüllung der optischen Faser (24), einen Ring (23) mit maximalem Index n₄, der größer ist als der der Umhüllung der optischen Faser (24), die den Mittelteil (21) umgibt, und einen Zwischenbereich (22) des Indexes n₂, der kleiner ist als n₁ und n₄ zwischen dem Mittelteil (21) und dem Ring (23);
- eine effektive Fläche, die gleich oder größer ist als 70 µm²;
**dadurch gekennzeichnet, dass** sie auch folgendes aufweist:
eine Wellenlänge λ₀ der Rückgängigmachung der chromatischen Dispersion zwischen 1400 und 1480 nm; eine Differenz zwischen dem Index des Mittelteils (21) und dem der Umhüllung (24) zwischen 6.10⁻³ und 15.10⁻³;
eine Differenz zwischen dem Index des Ringes (23) und dem der Umhüllung (24) kleiner als 10.10⁻³;
eine Dispersionsneigung in einem absoluten Wert zwischen 0,045 und 0,09 ps/nm².km bei Wellenlängen von 1550 nm; und
Verluste durch Krümmungen unter 0,05 dB bis 1550 nm bei einer Wicklung der Faser von 100 Umdrehungen um einen Strahl von 30 mm.

2. Faser nach Anspruch 1, **dadurch gekennzeichnet, dass** es sich um eine Monomode-Faser handelt.

3. Faser nach einem der Ansprüche 1 oder 2, **dadurch gekennzeichnet, dass** die Wellenlänge λ₀, bei der die chromatische Dispersion null ist, zwischen 1450 und 1480 nm und vorzugsweise bei 1475 nm liegt.

4. Faser nach einem der Ansprüche 1 bis 3, **dadurch gekennzeichnet, dass** sie eine Dispersionsneigung in einem absoluten Wert zwischen 0,045 und 0,075 ps/nm².km bei Wellenlängen von 1550 nm aufweist.

5. Faser nach einem der Ansprüche 1 bis 4, **dadurch gekennzeichnet, dass** sie eine Dämpfung von gleich oder weniger als 0,23 dB/km bei 1550 nm aufweist.
